Europäisches Patentamt

European Patent Office

Office européen des brevets

(11) Publication number: **0 259 046**
**A2**

# (12) EUROPEAN PATENT APPLICATION

(21) Application number: 87307242.5

(51) Int. Cl.⁴: **A23G 3/02**

(22) Date of filing: 17.08.87

(30) Priority: 22.08.86 GB 8620472

(43) Date of publication of application:
09.03.88 Bulletin 88/10

(84) Designated Contracting States:
CH DE FR GB LI NL

(71) Applicant: **Craig, Malcolm Thomas**
**32 Central Avenue,Pinner**
**Middlesex, HA5 5BS(GB)**

(72) Inventor: **Craig, Malcolm Thomas**
**32 Central Avenue,Pinner**
**Middlesex, HA5 5BS(GB)**

(74) Representative: **Newby, John Ross et al**
**J.Y. & G.W. Johnson Furnival House 14/18**
**High Holborn**
**London WC1V 6DE(GB)**

(54) Method and apparatus for moulding plastic material.

(57) For producing marzipan fruits a pair of moulding boards (13, 14) are provided with means (19) to cut a volume of marzipan from a slab of material of preset thickness rolled between spacer bars (17, 18), which volume accurately matches the volume required for rolling in the groove (16) defined between the boards (13, 14).

FIG. 3

EP 0 259 046 A2

## Method and apparatus for moulding plastic material

This invention relates to the moulding of plastic material and in particular to the moulding of marzipan to make shaped decorative articles such as miniature human or animal figures or models of fruit and eggs.

It is known to form a piece of marzipan into a desired shape by locating the piece in an elongate groove resulting from a merging of channels in the confronting faces of two moulding boards and moving one board relative to the other in the elongate direction of the groove to cause the piece to be shaped to the contour of the groove as it rolls between the moving boards. Normally the cross-sectional shape and size of each channel making up the resultant groove is the same, since the intention is that the piece of marzipan will rapidly approach the final desired shape and will not thereafter be deformed from that final desired shape.

In order to get good performance from such moulding boards, it is essential that the piece of plastic material to be shaped has a volume which is very close to the volume of the solid of revolution defined by the transverse cross-section of the resultant groove formed by the mating of the two channels in the boards when the latter are brought together. If the volume of the piece introduced into the groove is considerably less than, or considerably exceeds, the desired volume there may be no rolling of the piece in the groove and thus no significant shaping of the piece.

If the volume of the piece slightly exceeds the desired volume, the piece will roll, but will continually be deformed somewhat in the elongate direction of the resultant groove during the rolling operation so that no matter how long the rolling operation continues, an imperfect moulded article will result.

If the volume of the piece is slightly less than the desired volume, the piece cannot fully adopt the desired shape and will have a cavity formed somewhere on its surface which will render the moulding inferior and probably unusable for its intended purpose.

It is therefore an essential prerequisite of the use of moulding boards (and it should be appreciated that the term "board" in this context covers a narrow strip with but one channel in it as well as a conventional marzipan board with several channels in it) that there be an accurate way of determining the volume of material fed into the residual groove. Traditionally this has been done on the basis of the weight of the piece, but this method suffers from two disadvantages firstly because it, incorrectly, assumes that all materials to be shaped in the moulding boards will have the same density and secondly because it assumes that scales or other weighing devices of the required high accuracy will be available when required.

In one aspect, this invention relates to an improved method of producing moulded articles using a matched pair of moulding boards in which the volume of the piece of material required for moulding is determined by an areal assessment of a slab of material of preset thickness.

The material may be shaped into a slab of preset thickness by rolling a mass of material between thickness gauge bars (e.g. marzipan spacers) resting on a flat surface. The assessment of the area can be effected using a cutter of closed curve shape (e.g. circular) or by marking a grid of units (e.g. squares) on the rolled-out slab and cutting off a predetermined number of the thus-marked grid units. The underside of one of the moulding boards can be embossed with a grid to facilitate such marking.

In a further aspect, this invention relates to a kit of parts comprising a pair of moulding boards which together define a groove of a given transverse cross-sectional area, a pair of spacer bars of equal uniform thickness between which a uniform thickness layer of plastic material can be rolled and means to cut just such an area from the uniform thickness layer that its volume matches the volume of revolution of the transverse cross-sectional area of the groove.

Desirably the means to cut the required area is a cylindrical cutter (e.g. a circular cylindrical cutter) although it is also possible to mark a grid on the uniform thickness layer and cut out just so many units of the grid as are needed for the required volume.

In a still further aspect of the invention, apparatus for use in the method of the invention for moulding marzipan fruits comprises a pair of moulding boards which meet along a median plane and each define a channel which channels together create a groove of a given cross-sectional shape symmetrical about the median plane, is characterised in that each moulding board is provided by injection moulding and each is provided with surface texturing in the channel thereof.

The invention will now be further described, by way of example, with reference to the accompanying drawings, in which:

Figure 1 shows a cross-section through a pair of prior art single channel moulding boards for producing a pear-shaped article,

Figure 2 shows a rolled-out slab of marzipan with a disc cut therefrom for rolling in the boards of Figure 1 and with a grid marked thereon.

Figure 3 shows a first kit of parts according to the invention, and

Figure 4 shows a second kit of parts according to the invention.

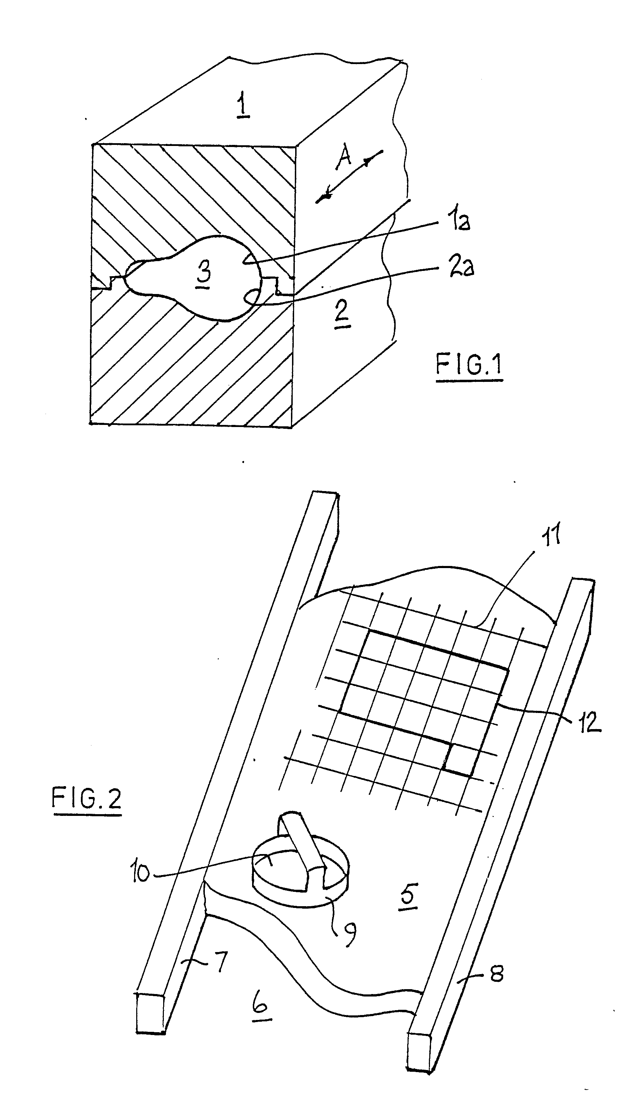

The boards 1, 2 shown in Figure 1 can be made from hardwood and each exhibits a shaped channel 1a, 2a which together define a pear-shaped groove 3 between the boards. If a piece of marzipan of the correct volume is located in the groove 3 and one board is moved relative to the other in the directions of the arrows A, a miniature pear will result. However, as discussed above, the volume of the piece rolled in the groove 3 must be accurately related to the cross-sectional area of the groove if a perfect shape is to result.

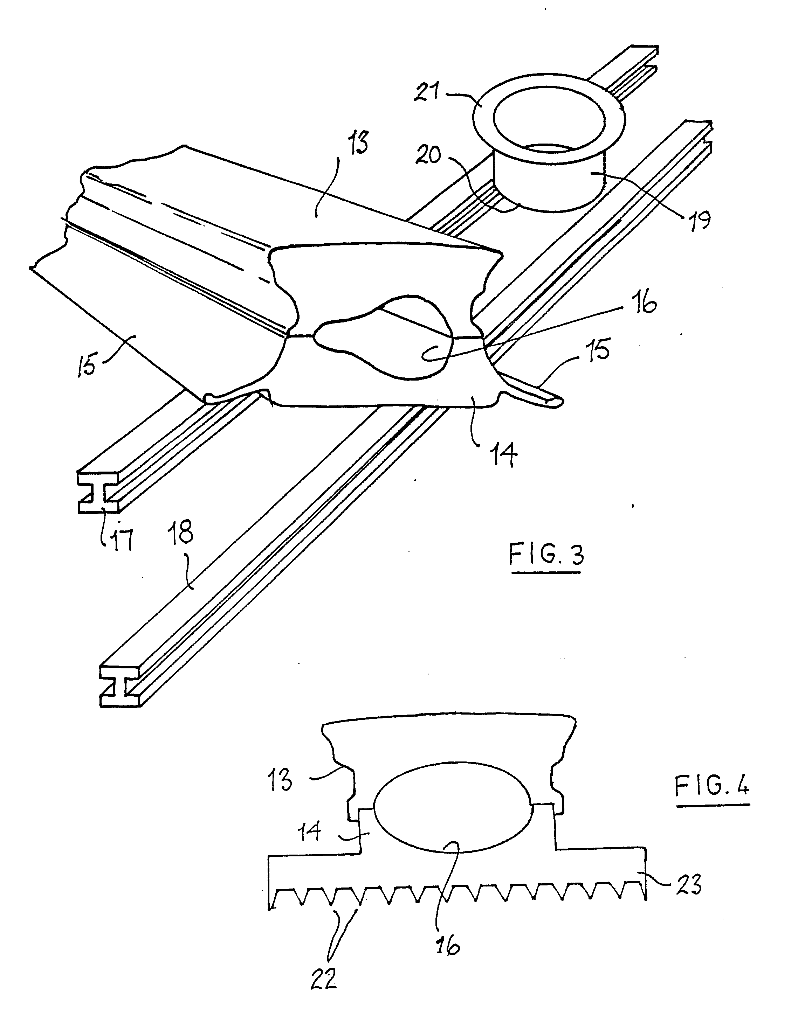

Figure 2 shows two ways in which an accurate volume of marzipan can easily be produced. A slab 5 of marzipan has been rolled out on a surface 6 between two spacer bars 7, 8. This ensures the slab has a uniform thickness over a major region thereof. A cutter 9 can be used to remove a piece 10 from the slab 5. Since the cutter 9 is of known cross-sectional area, the piece 10 will be of known volume. Cutters of a variety of different shapes can be provided. To ensure the right cutter is used for the right pair of boards, the cutter shape can be similar to the groove shape it is intended to be used with.

Figure 2 also shows a grid 11 marked on the slab 5. Such a grid enables a precise volume to be cut from the slab depending on how many grid units are used in the cut-out piece. The thicker line 12 in Figure 2 would represent the outline of a cut embracing 16 squares. Each moulding board could be marked with the number of squares required to be cut from a slab of standard thickness.

Figure 3 shows a kit of parts comprising a pair of moulding boards 13, 14, a pair of marzipan spacers 17, 18 and a cutter 19. The boards 13, 14 are extruded from metal or plastics material. The lower board 14 is provided with side flanges 15 to facilitate holding it steady on a table. The boards 13, 14 together define a groove 16 (in the illustrated case a pear-shaped groove) which has a given transverse cross-sectional area. The spacers 17, 18 (which can be some 250 mm long and 12.7 mm square) are also of metal or plastics material. The cutter 19 has a cutting edge 20 and a press flange 21 to enable it to be pushed into a rolled layer of marzipan.

The kit can include a number of different boards having different groove shapes and/or sizes therein. If the different groove shapes generate the same solid volume of revolution, one cutter size will do for all the pairs of boards. If different volumes are required, different cutters can be provided for different boards. To allow for groove shapes to be changed, each board can comprise a holder with a removable insert, a plurality of different inserts being provided to give the required range of groove shapes.

It may be desirable to provide texturing in the channels to enhance frictional grip on the marzipan and optionally also to produce a dimpled skin effect (e.g. of an orange or lemon). Surface texturing of the channels is readily performed if each board is produced by injection moulding.

Figure 4 shows a second kit of parts in which the tubular cutter 19 is dispensed with. Instead, the required volume of marzipan is cut by marking a controlled thickness layer of marzipan with a grid (e.g. as shown at 11 in Figure 2) using profiling 22 on the base 23 of one of the moulding boards.

One particular kit of parts comprises a pair of moulding boards 13 and 14 as shown in Figure 3 defining a groove 16 of circular cross-section of 24.64 mm diameter, a pair of marzipan spacers 17, 18 as shown in Figure 3 of 12.7 mm thickness and a cutter 19 of diameter 28.18 mm.

A further kit would comprise several pairs of moulding boards which define several different groove shapes (e.g. for making a sphere, a lemon, a pear and a strawberry), one pair of marzipan spacers and sufficient cutters to provide the correct volumes of marzipan for each groove size creatable with the supplied pairs of moulding boards.

## Claims

1. A method of producing moulded articles using a matched pair of moulding boards (1, 2) characterised in that the volume of the piece of material required for moulding is determined by an areal assessment of a slab of material (5) of preset thickness.

2. A method as claimed in claim 1, characterised in that the material (5) is shaped into a slab of preset thickness by rolling a mass of material between thickness gauge bars (7, 8) resting on a flat surface (6), and a cutter (9) of closed curve shape is used to cut the required volume from the slab.

3. A method as claimed in claim 1, characterised in that the material (5) is shaped into a slab of preset thickness by rolling a mass of material between thickness gauge bars (7, 8) resting on a flat surface (6), a grid (11) of units is marked on the rolled-out slab and a predetermined number of the thus-marked grid units are cut off (at 12).

4. A method as claimed in claim 3, characterised in that the marking of a grid (11) of units is effected using profiling (22) on the base (23) of one of the moulding boards (13, 14).

5. A kit of parts for making marzipan fruits comprising a pair of moulding boards (13, 14) which together define a groove (16) of a given transverse cross-sectional area, characterised by the inclusion of a pair of spacer bars (17, 18) of equal uniform thickness between which a uniform thickness layer of plastic material can be rolled and means (19) to cut just such an area from the uniform thickness layer that its volume matches the volume of revolution of the transverse cross-sectional area of the groove (16).

6. A kit of parts as claimed in claim 5, characterised in that the means to cut the required area is a cylindrical cutter (19).

7. Apparatus for use in the method of claim 1 for moulding marzipan fruits comprising a pair of moulding boards (13, 14) which meet along a median plane and each define a channel which channels together create a groove (16) of a given cross-sectional shape symmetrical about the median plane, characterised in that each moulding board (13, 14) is provided with surface texturing in he channels thereof.

8. Apparatus as claimed in claim 7, characterised in that the surface texturing is produced by injection moulding he boards.

9. Apparatus as claimed in claim 7 or claim 8, characterised in that one of the boards (14) is provided with side flanges (15) to facilitate holding it steady on a table.

10. Apparatus as claimed in any one of claims 7 to 9, characterised in that the base (23) of one of the boards (14) is provided with profiling (22) to mark a grid (11) on a slab (5) of marzipan.

FIG.1

FIG.2

FIG. 3

FIG. 4